# EUROPEAN PATENT APPLICATION

(11) **EP 4 276 441 A1**
(43) Date of publication of application: **15.11.2023**
(21) Application number: 22173254.8
(22) Date of filing: 13.05.2022
(51) Int. Cl.: G01N 1/22, F16K 3/02

(54) **AIR SAMPLER ADAPTER**

(71) Applicant: Plair SA, 1258 Perly (CH)
(72) Inventor: KISELEV, Denis, 1258 Perly (CH); GARCIA, Inès, 74160 Collonges-sous-Salève (FR); LAVIELLE, Sébastien, 74270 Frangy (CH)
(74) Representative: KATZAROV S.A.

(57) **Abstract**

The present invention relates to an air sampler adapter (11) adapted to air-tightly contain an air sampling unit (10) remotely sampling air of a zone of interest via a pipe (21), comprising a main portion (15) comprising a housing and a base portion (16) comprising fixing means (161) , wherein the fixing means (161) is configured to fix the air sampling unit (10) within said housing, a first end portion (17) comprising a sampled air inlet (14) and a first locking mechanism (12) adapted to be switched between an open position during sampling and an airtight closed position, and a second end portion (18) comprising an air outlet (14') and a second locking mechanism (13) adapted to be switched between an open position during sampling and an airtight closed position, characterized in that the air sampler adapter (11) is detachable from the pipe (21) connecting it to the zone of interest and in that the first and second locking mechanisms (12, 13) are adapted to be locked in airtight closed position for clean transportation when detached.

## Description

### Technical Field

The present invention relates to the technical field of airborne particle detectors, and more generally to the field of air sampling units used in air quality detection devices and methods.

### Background of the art

Nowadays, global awareness about microbial contamination has grown since the COVID-19 pandemic started. Moreover, more and more industries are moving towards sterile manufacturing to limit influence of airborne microbe containing particles on the quality and safety of their product. New technologies for real-time detection of these particles start to appear but often they still require use of a standard sampling, side-by-side, or in-line, to maintain compliance with regulatory requirements.

Conventional Sampling units generally consist in air microbial sampler with a nutritive petri dish. They are used to detect the presence of airborne microbe containing particles.

It is of crucial importance that the manipulation of a sampling unit must be done in a clean environment. When not handled properly, the sample source and the sampling unit risk contamination and the results might be inaccurate. For this reason, sampling units are handled in clean rooms, which are expensive and require a lot of planning and manual expertise to prevent contamination.

There is therefore a need for a device permitting to accommodate a standard sampling device, intended for stand-alone or in-line with a sampling device application

In this regard, a primary object of the invention is to solve the above-mentioned problems and more particularly to provide a device permitting use and transportation of a sampling unit without risking contamination of the sampling unit or the sample source.

### Summary of the invention

The above problems are solved by the present invention which is a device that serves as an adaptor to accommodate a standard sampling device, intended for stand-alone or in-line with a sampling device application.

The present invention permits a manipulation of sampling medium like agar plates and its exchange even inside a non-sterile environment while the sampled air can originate from a sterile one. This unique feature is especially helpful for a small production environments like robotized isolators as it removes the need to have a highly purified environment around the isolator to prevent sample contamination during the exchange.

Generally, the present invention comprises an adapter device, preferably an in-line adapter device, which allows the use and transportation of a sampling unit without risking contamination of the sampling unit or the sample source. Thanks to the adapter, the sampling unit can be transported through an unclean environment without any risk of contamination.

It removes the need for a clean room and only requires a small isolator, which is more cost-efficient and takes up less space than a clean room. The isolator can be placed in a lower grade clean room or in an unclean environment.

A first aspect of the invention is an air sampler adapter adapted to air-tightly contain an air sampling unit remotely sampling air of a zone of interest via a pipe, comprising a main portion comprising a housing and a base portion comprising fixing means, wherein the fixing means is configured to fix the air sampling unit within said housing, a first end portion comprising a sampled air inlet and a first locking mechanism adapted to be switched between an open position during sampling and an airtight closed position, and a second end portion comprising an air outlet and a second locking mechanism adapted to be switched between an open position during sampling and an airtight closed position characterized in that the air sampler adapter is detachable from the pipe connecting it to the zone of interest and in that the first and second locking mechanisms are adapted to be locked in airtight closed position for clean transportation when detached.

Preferably, the first and second end portions comprise a fitting for being connected to a duct connecting either to a pump and/or the zone of interest.

Advantageously, the air sampler adapter is an in-line airborne microbe sampling adapter.

According to a preferred embodiment of the present invention, the locking mechanism of the second end portion is a fast release locking mechanism.

Advantageously, the locking mechanism of the first end portion comprises an upper part and a lower part mounted together and each presenting a bore and a bore closing module.

Preferably, the upper and lower parts are preferably mounted to each other via a threading mechanisms.

According to a preferred embodiment of the present invention, when assembled, the upper and lower parts have their bores aligned so as to provide an air passage.

Advantageously, each of the bore closing modules has the form of a sliding tongue with an opening, which can be displaced linearly so as to align its opening with the bore of the part onto which they are mounted and open the passage or totally misalign so as to close the passage.

Preferably, the upper and lower parts are mounted together so as to provide a gap between the two bore closing modules.

A second aspect of the invention is an airborne particle detection station comprising a chamber in which an air to be analyzed in housed, a pump adapted to suck air from the chamber and an air sampler adapter according to the first aspect.

Advantageously, the air sampler adapter is preferably disposed in-line between the chamber (20) and the pump.

### Brief description of the drawings

Further particular advantages and features of the invention will become more apparent from the following non-limitative description of at least one embodiment of the invention which will refer to the accompanying drawings, wherein
- Figure 1 schematically represents the general context of installation of the air sampler adapter according to the preferred embodiment of the invention;
- Figure 2 represents a side cut view of the air sampler adapter according to the preferred embodiment of the invention;
- Figure 3 schematically represents an exploded view of the air sampler adapter according to the preferred embodiment of the invention;
- Figures 4A to 4C shows three different views of a first end portion of the air sampler adapter according to the preferred embodiment of the invention.

### Detailed description of the invention

The present detailed description is intended to illustrate the invention in a non-limitative manner since any feature of an embodiment may be combined with any other feature of a different embodiment in an advantageous manner.

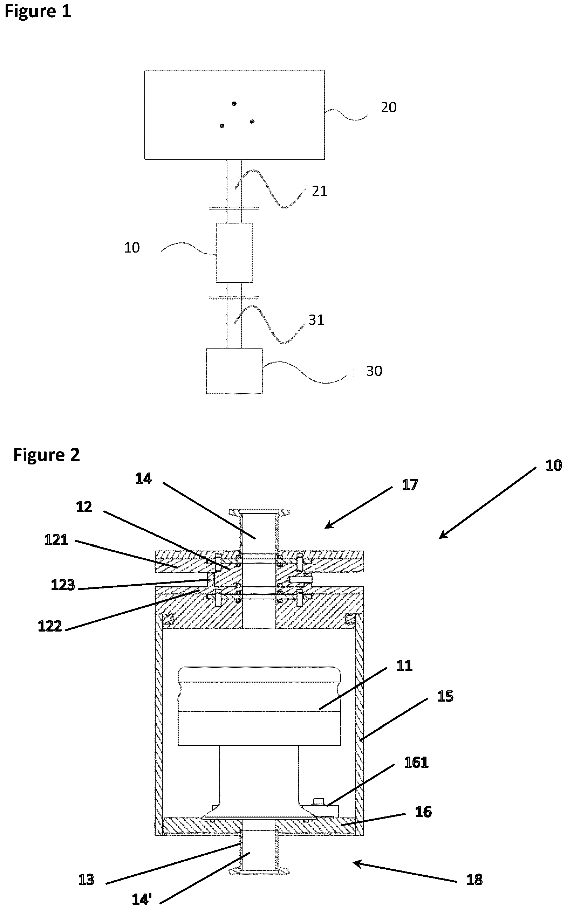

Figure 1 shows an aspect of the invention which is an airborne particle detection station 1 comprising a chamber 20 containing an air to be analyzed, a pump 30 adapted to suck the air from the chamber 20 and an air sampler adapter 10 according to the present invention which is preferably disposed in-line between the chamber 20 and the pump 30, preferably a first duct 21 linking the in-line sampler adapter 10 to the chamber 20 and a second duct 31 connecting the in-line sampler adapter 10 to the pump 30, such that the sucked air goes through it.

Although the above, it is important to keep in mind that the air sampler adapter 10 can be used in two ways: as a standalone unit or assembled to a real-time airborne particle detection station 1 as schematically depicted in figure 1.

When used in the real-time airborne particle detection station 1, the configuration is such that the air sampler adapter 10 is detachably installed, preferably in line, between the chamber 20 and the pump 30 such that the pump 30 sucks the air of the chamber 20 through the air sampler adapter 10 and the air sampling unit 11 housed inside, such that the air sampling unit 11 is crossed by the air of the chamber 0 that is sucked by the pump 30. This permits to have the air sampling unit 11 inside the air sampler adapter 10 collecting the particles in the air crossing the same and then be displaced to be analyzed elsewhere.

In other words, the in-line air sampler adapter 10 is used to prevent contamination of the sample in the air sampling unit 11 when transporting it from its sampling position to an isolator. This means the sampling can be done in any environment, and not necessarily in a clean room.

In order to reduce and preferably eliminate the risk of contamination, the airtightness between the air sampler adapter 10 and the chamber 20 (and therefore the duct 21) is crucial and must be perfect such that the air sampler adapter 10 can be detached and moved without risk.

Therefore, a first aspect of the invention is a detachable air sampler adapter 10 comprising mechanisms including airtight locks, which can be opened to let the air go through (during sampling) and closed to keep its inside room isolated. Preferably, two locking mechanisms 12, 13 are on the air sampler adapter 10 to keep the air sampling unit 11 housed into the air sampler adapter 10 isolated: one for the air entry and one for the air exit.

In addition, there is a corresponding locking mechanism at the exit of the sample source, i.e. the duct 21 in figure 1, to keep it closed so as to isolate the sampled air from leakage or contamination, when the in-line air sampler adapter 10 is removed to prevent to contaminate the chamber 20.

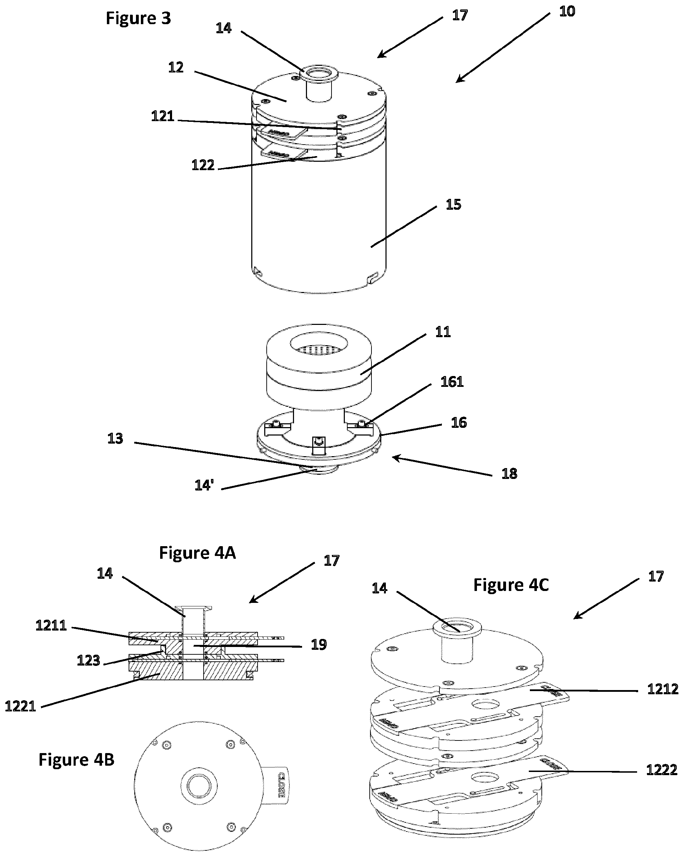

Figures 2 and 3 show two different views of the air sampler adapter 10 with the air sampling unit 11. Any air sampling unit that meets the dimension requirements can be used. The preferred dimensions are diameter 130 mm and height 125 mm but in general the adapter can be sized so as to fit any sampling unit. The invention can be adapted to any kind of sampling unit including ones comprising Petri dish.

The in-line air sampler adapter 10 is used to connect any air sampling unit 11 to a sampled air source 20 using fittings 14 providing an airtight connexion. The locking mechanisms 12, 13 of the adapter 10 permit clean transportation of the air sampling unit 11 through a non-sterile environment between the collecting location and the analysis location without the risk of contamination.

As shown in Figure 2, the air sampling unit 11 is held in the air sampler adapter 10. The locking mechanisms 12, 13 can either make the air sampler adapter 10 airtight, allowing for clean transportation, or let the air pass through for sampling.

The air sampler adapter 10 is adapted to air-tightly contain the air sampling unit 11 remotely sampling the air of the chamber 20 via the pipe 21 and comprises a main portion 15 comprising a cylindrical housing and a base portion 16 comprising fixing means 161, wherein the fixing means 162 is configured to fix the air sampling unit 10 within said housing 15, a first end portion 17 comprising a sampled air inlet 14 and a first locking mechanism 12 adapted to be switched between an open position during sampling and an airtight closed position, and a second end portion 18 comprising an air outlet 14' and a second locking mechanism 13 adapted to be switched between an open position during sampling and an airtight closed position.

The air sampler adapter 11 is detachable from the duct 21 connecting it to the chamber 20 and the first and second locking mechanism 12, 13 are adapted to be locked in airtight closed position for clean transportation when detached.

Figure 4 show a preferred embodiment of the first locking mechanism 12 of the first end portion 17.

The first locking mechanism, also called top mechanism 12, preferably comprises a top part 121 and a bottom part 122 wherein the top part 121 is connected to a fitting 14, preferably a KF-25 fitting, for being able to be connected to the duct 21 and the chamber, and the lower part 122 connects to the housing 15 of the air sampler adapted adapter 10, preferably via screws.

The upper and lower parts 121, 122 are preferably mounted to each other via a threading mechanisms 123 such that twisting the two parts slightly will lock/unlock them.

Each of the part 121, 122 comprises a bore 1211, 1221 which will constitute the air passage, and which are aligned when the two parts 122, 122 are mounted together. Also, each part 121, 122 presents a bore closing module 1212, 1222 which will obstruct the air passage in an airtight manner thanks, also to rubber O-rings disposed around the bore.

In figure 4, the bore closing module 1212, 1222 has the form of a sliding tongue with an opening, which can be displaced linearly so as to align its opening with the bore 1211, 1221 of the part onto which they are mounted and open the passage or totally misalign so as to close the passage. As an alternative, the bore closing module 1212, 1222 may have a circular movement or the same.

The upper and lower parts 121, 122 are mounted together so as to provide a gap 19 between the two bore closing modules 1212, 1222 which acts as a security zone, indeed when a user wants to stop the collection and detach the adapter both bore closing module 1212, 1222 are closed and create a non-contaminated air buffer volume further protecting the inside of the housing.

As per the second end portion 18 comprising the fixing means 161 and which is connected to the pump 30, the same locking mechanism as for the first end portion 17. However, since this portion is the exit, and the air flow is an exiting air flow, a fast release fitting may be sufficient as shown in figures.

Having, an adapter 11 with two different locking mechanisms 12, 13, at the inlet and at the outlet is therefore providing both enhanced airtightness thanked for the first one and reduces the complexity of the overall device thanks to the fast release fitting at the exit.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

## Claims

1. Air sampler adapter (11) adapted to air-tightly contain an air sampling unit (10) remotely sampling air of a zone of interest via a pipe (21), comprising
a main portion (15) comprising a housing and a base portion (16) comprising fixing means (161), wherein the fixing means (161) is configured to fix the air sampling unit (10) within said housing (15),
a first end portion (17) comprising a sampled air inlet (14) and a first locking mechanism (12) adapted to be switched between an open position during sampling and an airtight closed position, and
a second end portion (18) comprising an air outlet (14') and a second locking mechanism (13) adapted to be switched between an open position during sampling and an airtight closed position
**characterized in that** the air sampler adapter (11) is detachable from the pipe (21) connecting it to the zone of interest and **in that** the first and second locking mechanisms (12, 13) are adapted to be locked in airtight closed position for clean transportation when detached.

2. Air sampler adapter according to claim 1, **characterized in that** the first and second end portions (17, 18) comprise a fitting for being connected to a duct (21, 31) connecting either to a pump and/or the zone of interest.

3. Air sampler adapter according to any one of claims 1 or 2, **characterized in that** the air sampler adapter (11) is an in-line airborne microbe sampling adapter.

4. Air sampler adapter according to any one of claims 1 to 3, **characterized in that** the locking mechanism (13) of the second end portion (18) is a fast release locking mechanism.

5. Air sampler adapter according to any one of claims 1 to 4, **characterized in that** the locking mechanism (12) of the first end portion (17) comprises an upper part (121) and a lower part (122) mounted together and each presenting a bore (1211, 1221) and a bore closing module (1212, 1222).

6. Air sampler adapter according to claim 5, **characterized in that** the upper and lower parts (121, 122) are preferably mounted to each other via a threading mechanisms (123).

7. Air sampler adapter according to claim 5 or 6, **characterized in that** when assembled, the upper and lower parts (121, 122) have their bores (1211, 1221) aligned so as to provide an air passage.

8. Air sampler adapter according to claim 7, **characterized in that** each of the bore closing modules (1212, 1222) has the form of a sliding tongue with an opening, which can be displaced linearly so as to align its opening with the bore (1211, 1221) of the part onto which they are mounted and open the passage or totally misalign so as to close the passage.

9. Air sampler adapter according to any one of claims 1 to 8, **characterized in that** the upper and lower parts (121, 122) are mounted together so as to provide a gap (19) between the two bore closing modules (1212, 1222).

10. Airborne particle detection station comprising a chamber (20) in which an air to be analyzed in housed, a pump (30) adapted to suck air from the chamber (20) and an air sampler adapter (11) according to any one of claims 1-9.

11. Airborne particle detection station according to claim 10, wherein the air sampler adapter (11) is preferably disposed in-line between the chamber (20) and the pump (30).
